# EUROPEAN PATENT SPECIFICATION

(11) **EP 2 833 540 B1**
(45) Date of publication and mention of the grant of the patent: **17.05.2017**
(21) Application number: 12873338.3
(22) Date of filing: 30.03.2012
(51) Int. Cl.: H02M 7/493

(54) **POWER CONVERSION DEVICE**
STROMWANDLER
DISPOSITIF DE CONVERSION ÉLECTRIQUE

(43) Date of publication of application: 04.02.2015
(73) Proprietor: Toshiba Mitsubishi-Electric Industrial Systems Corporation, Tokyo 104-0031 (JP)
(72) Inventor: TANAKA, Tsuguhiro, Chuo-ku, Tokyo, 1040031 (JP); FUJIWARA, Naoki, Chuo-ku, Tokyo, 1040031 (JP)
(74) Representative: Zech, Stefan Markus
(86) International application number: PCT/JP2012/058594
(87) International publication number: WO 2013/145262

(56) References cited:
- EP-A2- 0 959 552
- EP-A2- 1 592 122
- EP-A2- 1 956 704
- WO-A1-2010/031614
- JP-A- S6 194 523
- JP-A- H06 197 543
- JP-A- H06 197 548
- JP-A- 2001 016 859
- JP-A- 2004 235 123
- JP-A- 2007 336 764
- US-A1- 2010 007 221
- US-A1- 2014 103 726

## Description

### Technical Field

The present invention relates generally to a power converter.

### Background Art

EP 1 592 122 A2 discloses an inverter controlling method which is provided for a power system that includes a DC power source and a plurality of inverters connected in parallel to the power source. US 2010/0007221 A1 discloses a method of controlling a multi-converter having N converters with series-connected inputs and parallel-connected outputs. In general, it is known to supply power to a load by power converters. Such power converters are controlled by various methods. For example, the following control methods are disclosed.

It is disclosed that the number of operating inverters is controlled to maximize alternating current (AC) output power of a power generation system (see Patent Literature 1). There is disclosed a power supply system in which a selection is randomly made from inverters and is operated (see Patent Literature 2). It is disclosed that maximum power of a photovoltaic cell detected from measured data of a pyranometer and a thermometer is compared to the total value of rated outputs of inverters and the inverters are controlled (see Patent Literature 3). It is disclosed that inverters are respectively connected to photovoltaic cells placed on respective roof surfaces facing in directions different from each other and the inverters are controlled (see Patent Literature 4).

However, if power is supplied to a load by power converters, it is hard to increase the accuracy of power to be supplied to the load because of an output error of each of the power converters.

### Citation List

### Patent Literature

Patent Literature 1 Jpn. Pat. Appln. KOKAI Publication No. 2000-341959
Patent Literature 2 Jpn. Pat. Appln. KOKAI Publication No. 2000-305633
Patent Literature 3 Jpn. Pat. Appln. KOKAI Publication No. 7-325635
Patent Literature 4 Jpn. Pat. Appln. KOKAI Publication No. 2000-166098

### Summary of Invention

An object of the present invention is to provide a power converter capable of improving the accuracy of power to be supplied to a load by controlling inverters.

A power converter according to an aspect of the present invention comprises inverters, AC sides of the inverters being connected in parallel; power command value determination means for determining a first power command value and a second power command value, the first power command value being lower than a proportional division power value obtained by proportionally dividing a required power value required as total output power of the inverters based on respective rated outputs of the inverters, the second power command value being higher than the proportional division power value, and control means for controlling output powers of the inverters at the first power command value and the second power command value determined by the power command value determination means, the power command value determination means determines the first power command value and the second power command value at power command values which are allowed to be output by the inverters and are closest to the proportional division value, the control means determines number of inverters to be made to perform output at the first power command value and number of inverters to be made to perform output at the second command value, respectively, to make the total output power of the inverters reach a power value closest to the required power value.

### Brief Description of Drawings

FIG. 1 is a structural view showing a structure of a power conversion system according to a first embodiment of the present invention;
FIG. 2 is a structural view showing a structure of a controller according to the first embodiment;
FIG. 3 is a structural view showing a structure of a power conversion system according to a second embodiment of the present invention; and
FIG. 4 is a waveform chart showing a relationship between a control cycle of a controller and a communication cycle of an inverter according to the

### second embodiment.

Best Mode for Carrying out the Invention Embodiments of the present invention will be described below with reference to the accompanying drawings.

### (First embodiment)

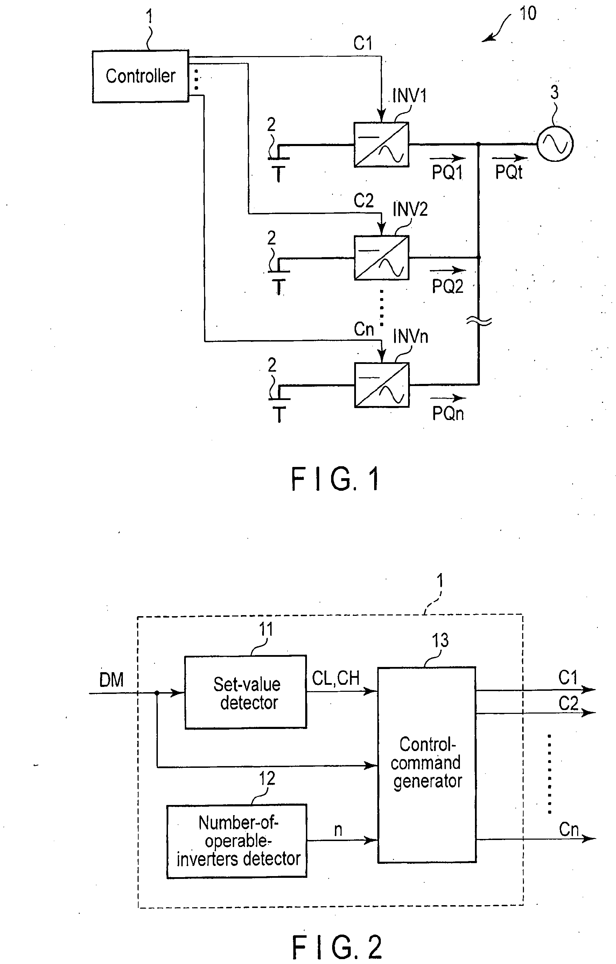

FIG. 1 is a structural view showing a structure of a power conversion system 10 according to a first embodiment of the present invention. Also, the same portions in the drawings are given the same signs, the detailed explanations thereof will be omitted, and different portions will be mainly described. Also in the following embodiment, overlapping explanations will be omitted.

The power conversion system 10 includes a controller 1, n direct current (DC) power sources 2, an AC power system 3, and n inverters INV1 to INVn. Here, n is an integer greater than one.

To DC sides of the inverters INV1 to INVn, the DC power sources 2 are connected, respectively. AC sides of all the inverters INV1 to INVn are connected to the AC power system 3. The inverters INV1 to INVn convert DC power supplied from the DC power sources 2 into AC power and supply it to the AC power system 3. The inverters INV1 to INVn are controlled in accordance with control command values C1 to Cn output from the controller 1. In addition, the inverters INV1 to INVn are provided with control modules (not shown in the figures), respectively. Necessary control other than those by a command from the controller 1 is executed over the inverters INV1 to INVn by the control modules provided, respectively. For example, the control modules perform monitoring, measurement, protection, transmission and reception of data to and from the controller 1, intermediation of control by the controller 1, and the like. A part of the functions performed by the control modules may be performed by the controller 1.

The DC power sources 2 supply DC power to the inverters INV1 to INVn, respectively. The DC power sources 2 may be any things as long as they output DC power. For example, the DC power sources 2 are photovoltaic (PV) cells, secondary cells, or converters.

The AC power system 3 is an AC load which receives AC power Pt from the inverters INV1 to INVn. The AC power system 3 may include an AC power source.

The controller 1 executes such control under which all the inverters INV1 to INVn are controlled together. The controller 1 generates control command values C1 to Cn for controlling the respective inverters INV1 to INVn. The controller 1 outputs control command values C1 to Cn to the respective inverters INV1 to INVn, and controls output powers PQ1 to PQn of the respective inverters INV1 to INVn. Power PQt to be supplied to the AC power system 3 is thereby controlled. In addition, the controller 1 has a scheduling function for activating or stopping the inverters INV1 to INVn sequentially, and the like.

FIG. 2 is a structural view showing a structure of the controller 1 according to the present embodiment.

The controller 1 includes a set-value detector 11, a number-of-operable-inverters detector 12, and a control-command generator 13.

A required power value DM required by the AC power system 3 is input to the set-value detector 11 from an upper control system. The required power value DM may be preset for the controller 1. The set-value detector 11 detects one or two set values for each of effective power and reactive power. Here, the set values are values which determine the output power values preset for the inverters INV1 to INVn. Accordingly, set values determined by the set-value detector 11 correspond to power command values for output powers PQ1 to PQn of the respective inverters INV1 to INVn. The set-value detector 11 outputs the detected set values to the control-command generator 13.

The number-of-operable-inverters detector 12 detects the number n of operable inverters INV1 to INVn all the time. The number n may be detected in any way. For example, the number-of-operable-inverters detector 12 receives, from wiring connected to each of the inverters INV1 to INVn, a signal indicating whether they are operable or not.

To the control-command generator 13, the required power value DM, one or two set values detected by the set-value detector 11, and the number n detected by the number-of-operable-inverters detector 12 are input. The control-command generator 13 generates control command values C1 to Cn on the basis of the required power value DM, the one or two set values, and the number n. The control-command generator 13 outputs generated control command values C1 to Cn to the respective inverters INV1 to INVn and controls the inverters INV1 to INVn individually. Control command values C1 to Cn include set values (i.e., power command values) for each of effective power and reactive power. In addition, control command values C1 to Cn include information necessary for controlling the respective inverters INV1 to INVn, information necessary for communication, and the like. The inverters INV1 to INVn output powers PQ1 to PQn in accordance with control command values C1 to Cn received, respectively. Total power PQt output from the inverters INV1 to INVn is thereby supplied to the AC power system 3.

Next, a control method of the inverters INV1 to INVn by the controller 1 will be described. Here, it is supposed that performance such as the control cycle and the resolution of output power of all the inverters INV1 to INVn is the same. Also, although control over effective power will be mainly described, the same is true of control over reactive power.

Now, it is supposed that the required power value DM requires that effective power corresponding to P% of the total of respective maximum output powers of the n inverters INV1 to INVn be supplied to the AC power system 3. That is, if all the n inverters INV1 to INVn output effective power of exactly P% of maximum output power (the average effective power value obtained by dividing the required power value DM by n, if capacities are the same; an effective power value obtained by proportionally dividing the required power value DM on the basis of rated outputs of the respective inverters, if the capacities are different), power according to the required power value DM can be supplied to the AC power system 3.

The controller 1 detects the number n of operable inverters INV1 to INVn. Here, it is supposed that all the n inverters INV1 to INVn are operable.

If effective power of exactly P% of maximum output power can be output from each of the inverters INV1 to INVn (if the inverters INV1 to INVn have set values of P%), the controller 1 outputs, to all the inverters INV1 to INVn, control command values C1 to Cn to output effective power of P% at the common set values of P%. Here, if the difference between a set value closest to P% and P% is lower than the value obtained by dividing the resolution of output powers of the inverters INV1 to INVn by the number n, the set value closest to P% can be regarded as a set value of exactly P%.

If the inverters INV1 to INVn cannot output effective power of exactly P% by the resolution of output powers of the inverters INV1 to INVn (if the inverters INV1 to INVn do not have set values of P%), the controller 1 controls the n inverters INV1 to INVn in the following manner.

First, the controller 1 searches for two set values CL and CH which the inverters INV1 to INVn can output. The low set value CL is a set value of CL% which is closest to P% while being lower than P%. The high set value CH is a set value of CH% which is closest to P% while being higher than P%.

Next, the controller 1 determines inverters INV1 to INVn to be made to output the low set value CL and inverters INV1 to INVn to be made to output the high set value CH, respectively, on the basis of the number n of operable inverters INV1 to INVn. The numbers of the inverters INV1 to INVn to be made to output the two set values CL and CH, respectively, are determined, such that the total of effective power output from all the inverters INV1 to INVn becomes closest to a required effective power of P%.

The controller 1 outputs control command values C1 to Cn to the respective inverters INV1 to INVn to make them output power at the set values CL and CH.

Next, with respect to the case where the inverters INV1 to INVn do not have the same set values as required output powers PQ1 to PQn, the control of the inverters INV1 to INVn by the controller 1 will be described with concrete examples.

Here, it is supposed that the required power value DM requires that effective power corresponding to 60.3% of the total of respective maximum output powers of ten inverters INV1 to INVn be supplied to the AC power system 3. Also, it is supposed that the resolution of output powers of the inverters INV1 to INVn is in steps of 1%.

The controller 1 searches for a set value CL which is closest to 60.3% while being lower than 60.3%. The controller 1 determines that the set value CL is 60%. Also, the controller 1 searches for a set value CH which is closest to 60.3% while being higher than 60.3%. The controller 1 determines that the set value CH is 61%.

The controller 1 performs calculation for determining the respective numbers of inverters INV1 to INVn to be made to output the set value CL and the set value CH. The controller 1 determines the respective numbers of the inverters INV1 to INVn to be made to output the set value CL and the set value CH, such that the total effective power of ten inverters INV1 to INVn becomes closest to effective power required by the required power value DM. More specifically, the controller 1 determines that the number of the inverters. INV1 to INVn to be made to output the low set value CL is seven, and the number of the inverters INV1 to INVn to be made to output the high set value CH is three.

Thus, the controller 1 generates control command values C1 to Cn to make seven inverters INV1 to INVn output the low set value CL, and to make three inverters INV1 to INVn to output the high set value CH.

The inverters INV1 to INVn output power to the AC power system 3 in accordance with the control command values C1 to Cn generated as described above. The inverters INV1 to INVn thereby supply effective power of 60.3% as required by the required power value DM, while they have the accuracy with which power of 60% is output by a command value of 60.3%.

Next, the case where the inverters INV1 to INVn have stopped because of a failure, etc., will be described.

Here, it is supposed that the first inverter INV1 has stopped during operation of the power conversion system 10. Also, it is supposed that the inverter INV1, which has stopped, performed output according to the low set value CL.

The controller 1 detects, by the number-of-operable-inverters detector 12, that the number of operating inverters has decreased by one to n-1. The controller 1 calculates set values for the respective inverters INV2 to INVn excluding the first inverter
INV1 as in the above-described case where the number of operating inverters is n, such that effective power corresponding to the low set value CL is shared by n-1 inverters.

Also, the controller 1 calculates a change rate of power to be supplied to the AC power system 3 in the case where power corresponding to the low set value CL is increased.

If a calculated change rate of power falls within a preset permissible range of an output change rate, the controller 1 outputs control command values C2 to Cn on the basis of calculated set values for the respective inverters INV2 to INVn.

When the inverter INV1 has stopped, the permissible range of the output change rate of the total output power PQt is prevented from being exceeded by reducing output of the inverter INV1 and increasing outputs of the other inverters INV2 to INVn.

Next, the case where the required power value DM increases, exceeding the permissible range of the output change rate, will be described.

If a change rate of power due to an increase in the required power value DM has exceeded the preset permissible range of the output change rate, the controller 1 limits set values for the respective inverters INV1 to INVn for outputting an increased required power value DM within the permissible range of the output change rate. The controller 1 outputs control command values C1 to Cn on the basis of the limited set values. Then, the controller 1 outputs the control command values C1 to Cn, gradually increasing the set values until they reach values before limitation, not to exceed the permissible range of the output change rate.

According to the present embodiment, the resolution (%) of the total output power PQt of all the inverters INV1 to INVn can be made smaller than the resolution of output powers PQ1 to PQn of the individual inverters INV1 to INVn by controlling the inverters INV1 to INVn through division into set values CL and CH which are respectively lower and higher than a value obtained by dividing the required power value DM by the number n of operable inverters INV1 to INVn. The controller 1A can thereby increase the accuracy of making the total output power PQt of the inverters INV1 to INVn closer to the required power value DM.

Also, a rapid fluctuation of power to be supplied to the AC power system 3 can be prevented by changing the total output power PQt of the inverters INV1 to INVn within a preset permissible range of an output change rate.

### (Second embodiment)

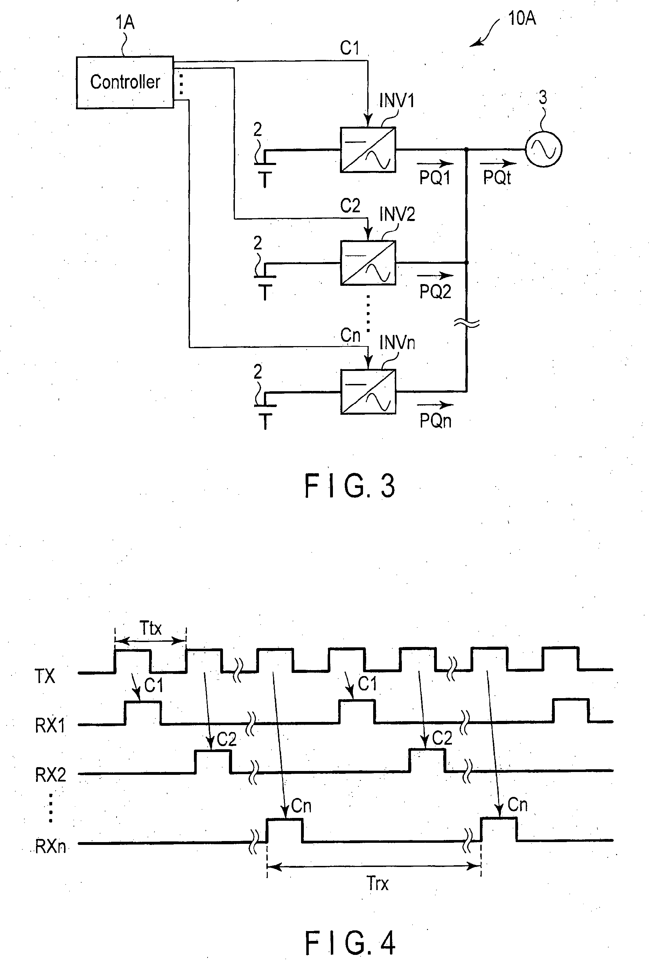

FIG. 3 is a structural view showing a structure of a power conversion system 10A according to a second embodiment of the present invention.

The power conversion system 10A is obtained by replacing the controller 1 with a controller 1A in the power conversion system 10 according to the first embodiment shown in FIG. 1. With respect to the other points, the power conversion system 10A has the same structure as that of the power conversion system 10 according to the first embodiment.

The controller 1A outputs control command values C1 to Cn to the respective inverters INV1 to INVn at regular time intervals. With respect to the other points, the controller 1A has the same structure as the controller 1 according to the first embodiment.

FIG. 4 is a waveform chart showing a relationship between a control cycle Ttx of the controller 1A and a communication cycle Trx of the inverters INV1 to INVn according to the present embodiment. A wavy form TX indicates the state of the controller 1A. Wavy forms RX1 to RXn indicate the states of the control modules of the inverters INV1 to INVn, respectively. In each
of the wavy forms TX and RX1 to RXn, a high level and a low level indicate being in a calculation process and not being in a calculation process, respectively.

A cycle in which the wavy form TX of the controller 1A reaches a high level is the control cycle Ttx. The control cycle Ttx is also the resolution of control intervals of the power conversion system 10A. A cycle in which the wavy forms RX1 to RXn of the inverters INV1 to INVn reach a high level is the communication cycle Trx with the controller 1A. Here, it is supposed that the communication cycle Trx is set at a shortest cycle.

The controller 1A outputs control command values C1 to Cn at regular intervals sequentially in the order of the first inverter INV1, the second inverter INV2, ... , the n-th inverter INVn. After outputting the control command value Cn to the last n-th inverter INVn, the controller 1A outputs again the control command values C1 to Cn in order from the first inverter INV1. The controller 1A repeats this and controls the total output power PQt of the inverters INV1 to INVn. That is, the controller 1A sequentially controls output powers PQ1 to PQn of the respective inverters INV1 to INVn with time-shared time differences.

In this manner, the controller 1A controls the total output power PQt of the inverters INV1 to INVn substantially in the control cycle Ttx.

According to the present embodiment, the following operation and effect can be obtained in addition to the operation and effect according to the first embodiment.

If the shortest communication cycle Trx between the controller 1A and each of the inverters INV1 to INVn is longer than the control cycle Ttx of the controller 1A, the controller 1A can control the individual inverters INV1 to INVn only in the communication cycle Trx.
Thus, by controlling at least one of the inverters INV1 to INVn in the control cycle Ttx, the controller 1A can control the total output power PQt of the inverters INV1 to INVn in the control cycle Ttx shorter than the shortest communication cycle Trx.

Accordingly, by controlling the total output power PQt of the inverters INV1 to INVn in the control cycle Ttx, the controller 1A can perform stable power supply to the AC power system 3.

Also, the controller 1A can cause target output power PQt to be reached promptly without causing a rapid power fluctuation by gradually changing the output power PQt in the control cycle Ttx even if the output power PQt is greatly changed.

In each of the embodiments, the numbers of inverters INV1 to INVn to be made to output two set values CL and CH, respectively, are determined according to required power; however, this does not impose any restrictions on methods of determining the numbers of the inverters INV1 to INVn. For example, the inverters INV1 to INVn to be made to output two values CL and CH, respectively, may be determined in advance. Even if the numbers of the inverters INV1 to INVn to be made to output the two set values CL and CH, respectively, are preset to be the same, the resolution of the total output power PQt of the inverters INV1 to INVn can be half that in the case where output is performed at one set value all the time.

Also, in each of the embodiments, it is desirable that the two set values CL and CH be set at set values closest to the power values to be output.

Moreover, in each of the embodiments, if there is
a set value which is exactly the same as the power value to be output, all the inverters INV1 to INVn are controlled at exactly the same set value; however, this does not impose any restrictions. If the number of the inverters INV1 to INVn is three or more, they may be controlled at two set values all the time. Also in this case, the resolution of the total output power PQt of the inverters INV1 to INVn can be made finer than that in the case where control is executed at one set value all the time.

In addition, in each of the embodiments, the controller 1 executes control so that an output change rate does not exceed a permissible range in the case where the power to be output from the inverters INV2 to INVn is increased after one inverter INV1 is stopped. However, in the other cases as well, the controller 1 may execute control so that the permissible range of the output change rate is not exceeded. For example, output powers PQ1 to PQn of the inverters INV1 to INVn are rapidly changed in such cases as those where the DC power sources 2 are PV cells which are rapidly insolated. Even in these cases, a rapid fluctuation of power to be supplied to the AC power system 3 can be prevented by controlling the inverters INV1 to INVn to gradually increase output power within the permissible range of the output change rate.

Moreover, in each of the embodiments, the number n of operable inverters INV1 to INVn is detected, but may be preset. In this case, if any of the inverters INV1 to INVn is broken, an operator may change the set number, or a control method of the inverters INV1 to INVn may be changed to another. Another control method is, for example, a method of making all the inverters INV1 to INVn output power at the same set value.

Also, in each of the embodiments, performance such as the control cycle and the resolution of output power of all the inverters INV1 to INVn has been described as
being the same, but this does not impose any restrictions. The inverters INV1 to INVn may be configured in any way, as long as the inverters INV1 to INVn can be controlled at a set value CL and a set value CH which are lower and higher, respectively, than a proportional division value obtained by proportionally dividing the required power value DM on the basis of rated outputs of the respective inverters INV1 to INVn (if the rated outputs are the same, the average power value obtained by dividing the required power value DM by the number n of operable inverters INV1 to INVn) and the total output power value PQt of the inverters INV1 to INVn can be controlled with a resolution (%) finer than the resolution (%) of the individual inverters INV1 to INVn.

Moreover, in the first embodiment, although the order and time intervals for outputting control command values C1 to Cn to the inverters INV1 to INVn have not been mentioned, the control command values may be output in any way. The controller 1 may output the control command values C1 to Cn to the inverters INV1 to INVn in any order and at any intervals, or may always output the control command values C1 to Cn simultaneously in the communication cycle Trx.

Also, in the second embodiment, if any of the inverters INV1 to INVn has stopped, the control cycle Ttx of the controller 1 may be changed to be longer within a range shorter than the shortest communication cycle Trx with each of the inverters INV1 to INVn. The total output power PQt of the inverters INV1 to INVn can be thereby controlled in the regular control cycle Ttx, even if the operable inverters INV1 to INVn have decreased. In addition, as the number of operable inverters, the number n detected by the number-of-operable-inverters detector 12 may be used.

Moreover, in the second embodiment, if the total output power PQt of the inverters INV1 to INVn can be
controlled in the control cycle Ttx, control command values may be simultaneously output to a part of inverters.

It is to be noted that the present invention is not restricted to the foregoing embodiments, and constituent elements can be modified and changed into shapes without departing from the scope of the invention at an embodying stage. Additionally, various inventions can be formed by appropriately combining a plurality of constituent elements disclosed in the foregoing embodiments. For example, several constituent elements may be eliminated from all constituent elements disclosed in the embodiments. Furthermore, constituent elements in the different embodiments may be appropriately combined.

## Claims

1. A power converter (10) **characterized by** comprising:
inverters (INV1 to INVn), AC sides of the inverters (INV1 to INVn) being connected in parallel;
power command value determination means (11) for determining a first power command value (CL) and a second power command value (CH), the first power command value (CL) being lower than a proportional division power value obtained by proportionally dividing a required power value required as total output power (DM) of the inverters (INV1 to INVn) based on respective rated outputs of the inverters (INV1 to INVn), the second power command value (CH) being higher than the proportional division power value, and
control means (1) for controlling output powers of the inverters (INV1 to INVn) at the first power command value (CL) and the second power command value (CH) determined by the power command value determination means (11),the power command value determination means (11) determines the first power command value (CL) and the second power command value (CH) at power command values which are allowed to be output by the inverters (INV1 to INVn) and are closest to the proportional division value,
the control means determines number of inverters (INV1 to INVn) to be made to perform output at the first power command value (CL) and number of inverters (INV1 to INVn) to be made to perform output at the second command value (CH), respectively, to make the total output power (DM) of the inverters (INV1 to INVn) reach a power value closest to the required power value.

2. The power converter (10) of claim 1, **characterized by** further comprising common control means for controlling output powers of the inverters (INV1 to INVn) at a common power command value.

3. The power converter (10) of claim 1 or 2, **characterized by** further comprising number of operable-inverters detection means for detecting number of operable inverters of the inverters (INV1 to INVn).

4. The power converter (10) of anyone of claim 1 to claim 3, **characterized in that** the control means (1) executes control to make a change rate of the total output power of the inverters (INV1 to INVn) fall within a preset permissible range.

5. A control apparatus for a power converter (10), wherein the control apparatus is configured for controlling the power converter including inverters (INV1 to INVn), AC sides of the inverters (INV1 to INVn) being connected in parallel, the control apparatus **characterized by** comprising:
power command value determination means (11) for determining a first power command value (CL) and a second power command value (CH), the first power command value (CL) being lower than a proportional division power value obtained by proportionally dividing a required power value required as total output power (DM) of the inverters (INV1 to INVn) based on respective rated outputs of the inverters (INV1 to INVn), the second power command value (CH) being higher than the proportional division power value, and
control means for controlling output powers of the inverters (INV1 to INVn) at the first power command value (CL) and the second power command value (CH) determined by the power command value determination means (11),
the power command value determination means (11) determines the first power command value (CL) and the second power command value (CH) at power command values which are allowed to be output by the inverters (INV1 to INVn) and are closest to the proportional division value,
the control means determines number of inverters (INV1 to INVn) to be made to perform output at the first power command value (CL) and number of inverters (INV1 to INVn) to be made to perform output at the second command value (CN), respectively, to make the total output power (DM) of the inverters (INV1 to INVn) reach a power value closest to the required power value.

6. A control method for a power converter (10), the control method controlling the power converter including inverters (INV1 to INVn), AC sides of the inverters (INV1 to INVn) being connected in parallel, the control method **characterized by** comprising:
determining a first power command value (CL) and a second power command value (CH), the first power command value (CL) being lower than a proportional division power value obtained by proportionally dividing a required power value required as total output power (DM) of the inverters based on respective rated outputs of the inverters (INV1 to INVn), the second power command value (CH) being higher than the proportional division power value;
wherein the first power command value (CL) and the second power command value (CH) are determined at power command values which are allowed to be output by the inverters (INV1 to INVn) and are closest to the proportional division value; and
controlling output powers of the inverters (INV1 to INVn) at the determined first power command value (CL) and the determined second power command value (CH),
wherein a number of inverters (INV1 to INVn) to be made to perform output at the first power command value (CL) and number of inverters (INV1 to INVn) to be made to perform output at the second command value(CH), respectively, to make the total output power (DM) of the inverters (INV1 to INVn) reach a power value closest to the required power value, is determined.

## Patentansprüche

1. Leistungswrandler (10), der **dadurch gekennzeichnet ist, dass** er aufweiset:
Inverter (INV1 bis INVn), wobei Wechselstromseiten der Inverter (INV1 bis INVn) parallelgeschaltet sind;
eine Leistungsbefehlswertbestimmungseinrichtung (11) zum Bestimmen eines ersten Leistungsbefehlswerts (CL) und eines zweiten Leistungsbefehlswerts (CH), wobei der erste Leistungsbefehlswert (CL) niedriger ist als ein Proportionalteilungsleistungswert, der erhalten wird, indem ein erforderlicher Leistungswert, der als Gesamtausgangsleistung (DM) der Inverter (INV1 bis INVn) erforderlich ist, auf Grundlage jeweiliger Bemessungsleistungen der Inverter (INV1 bis INVn) proportional geteilt wird, wobei der zweite Leistungsbefehlswert (CH) höher ist als der Proportionalteilungsleistungswert, und
eine Steuereinrichtung (1) zum Steuern der Ausgangsleistungen der Inverter (INV1 bis INVn) mit dem durch die Leistungsbefehtswertbestimmungseinrichtungen (11) bestimmten ersten Leistungsbefehlswert (CL) und zweiten Leistungsbefehlswert (CH), wobei die Leistungsbefehlswertbestimmungseinrichtung (11) den ersten Leistungsbefehlswert (CL) und den zweiten Leistungsbefehlswert (CH) mit Leistungsbefehlswerten bestimmt, die durch die Inverter (INV1 bis INVn) ausgegeben werden dürfen und dem Proportionalteilungswert am nächsten kommen,
wobei die Steuereinrichtung jeweils eine Anzahl von Invertern (INV1 bis INVn) bestimmt, die dazu gebracht werden sollen, einen Ausgang mit dem ersten Leistungsbefehiswert (CL) erfolgen zu lassen, und eine Anzahl von Invertern (INV1 bis INVn) bestimmt, die dazu gebracht werden sollen, einen Ausgang mit dem zweiten Leistungsbefehtswert (CH) erfolgen zu lassen, um die Gesamtausgangsleistung (DM) der Inverter (INV1 bis INVn)) einen Leistungswert erreichen zu lassen, der dem erforderlichen Leistungswert am nächsten kommt.

2. Leistungswandler (10) nach Anspruch 1, **dadurch gekennzeichnet, dass** er darüber hinaus eine gemeinsame Steuereinrichtung zum Steuern von Ausgangsleistungen der Inverter (INV1 bis INVn) mit einem gemeinsamen Leistungsbefehfswert aufweist.

3. Leistungswandler (10) nach Anspruch 1 oder 2, dadurch gekenntzeichnet, dass er darüber hinaus Detektionseinrichtungen für eine Anzahl funktionsfähiger Inverter zum Detektieren einer Anzahl von funktionsfähigen Invertern der Inverter (INV1 bis INVn) aufweist.

4. Leistungswandler (10) nach einem der Ansprüche 1 bis 3, **dadurch gekennzeichnet, dass** die Steuereinrichtung (1) eine Steuerung ausführt, um eine Veränderungsrate der Gesamtausgangsleistung der Inverter (INV1 bis INVn) in einen voreingestellten zulässigen Bereich fallen zu lassen.

5. Steuervorrichtung für einen Leistungswandler (10), wobei die Steuervorrichtung dazu ausgelegt ist, den Inverter (INV1 bis INVn) enthaltenden Leistungswandler zu steuern, wobei Wechselstromseiten der Inverter (INVn bis INVn) parallelgeschaltet sind, wobei die Steuervorrichtung dadurch gekenntzeichnet ist, dass sie aufweist:
eine Leistungsbefehlswertbestimmungseinrichtung (11) zum Bestimmen eines ersten Leistungsbefehlswerts (CL) und eines zweiten Leistungsbefehlswerts (CH), wobei der erste Leistungsbefehlswert (CL) niedriger ist als ein Proportionalteilungsleistungswert, der erhalten wird, indem ein erforderlicher Leistungswert, der als Gesamtausgangsleistung (DM) der Inverter (INV1 bis INVn) erforderlich ist, auf Grundlage jeweiliger Bemessungsleistungen der Inverter (INV1 bis INVn) proportional geteilt wird, wobei der zweite Leistungsbefehlswert (CH) höher ist als der Proportionalteilungsieistungswert, und
eine Steuereinrichtung (1) zum Steuern der Ausgangsleistungen der Inverter (INV1 bis INVn) mit dem durch die Leistungsbefehlswertbestimmungseinrichtungen (11) bestimmten ersten Leistungsbefehlswert (CL) und zweiten Leistungsbefehlswert (CH),
wobei die Leistungsbefehlswertbestimmungseinrichtung (11) den ersten Leistungsbefehlswert (CL) und den zweiten Leistungsbefehlswert (CH) mit Leistungsbefehlswerten bestimmt, die durch die Inverter (INV1 bis INVn) ausgegeben werden dürfen und dem Proportionalteilungswert am nächsten kommen,
wobei die Steuereinrichtung jeweils eine Anzahl von Invertern (INV1 bis INVn) bestimmt, die dazu gebracht werden sollen, einen Ausgang mit dem ersten Leistungsbefehlswert (CL) erfolgen zu lassen, und eine Anzahl von Invertern (INV1 bis INVn) bestimmt, die dazu gebracht werden sollen, einen Ausgang mit dem zweiten Leistungsbefehlswert (CH) erfolgen zu lassen, um die Gesamtausgangsleistung (DM) der Inverter (INV1 bis INVn) einen Leistungswert erreichen zu lassen, der dem erforderlichen Leistungswert am nächsten kommt.

6. Steuerverfahren für einen Leistungswandler (10), wobei das Steuerverfahren den Inverter (INV1 bis INVn) enthaltenden Leistungswandler steuert, wobei Wechselstromseiten der Inverter (INV1 bis INVn) parallelgeschaltet sind, wobei das Steuerverfahren **dadurch gekennzeichnet ist, dass** es umfasst:
Bestimmen eines ersten Leistungsbefehtswerts (CL) und eines zweiten Leistungsbefehlswerts (CH), wobei der erste Leistungsbefehlswert (CL) niedriger ist als ein Proportionalteilungsleistungswert, der erhalten wird, indem ein erforderlicher Leistungswert, der als Gesamtausgangsleistung (DM) der Inverter erforderlich ist, auf Grundlage jeweiliger Bemessungsleistungen der Inverter (INV1 bis INVn) proportional geteilt wird, wobei der zweite Leistungsbefehlswert (CH) höher ist als der Proportionalteilungsleistungswert;
wobei der erste Leistungsbefehlswert (CL) und der zweite Leistungsbefehlswert (CH) mit Leistungsbefehlswerten bestimmt werden, die durch die Inverter (INV1 bis INVn) ausgegeben werden dürfen und dem Proportionalteilungswert am nächsten kommen; und
Steuern von Ausgangsleistungen der Inverter (INV1 bis INVn) mit dem bestimmten ersten Leistungsbefehlswert (CL) und dem bestimmten zweiten Leistungsbefehlswert (CH),
wobei eine Anzahl von Invertern (INV1 bis INVn) bestimmt wird, die dazu gebracht werden sollen, einen Ausgang mit dem ersten Leistungsbefehlswert (CL) erfolgen zu lassen, und eine Anzahl von Invertern (INV1 bis INVn) bestimmt wird, die dazu gebracht werden sollen, einen Ausgang mit dem zweiten Leistungsbefehlswert (CH) erfolgen zu lassen, um die Gesamtausgangsleistung (DM) der Inverter (INV1 bis INVn) einen Leistungswert erreichen zu lassen, der dem erforderlichen Leistungswert am nächsten kommt.

## Revendications

1. Convertisseur de puissance (10) **caractérisé en ce qu'**il comprend
des inverseurs (INV1 à INVn), des côtés CA des inverseurs (INV1 à INVn) étant connectés en parallèle ;
des moyens de détermination de valeur de consigne de puissance (11) destinés à déterminer une première valeur de consigne de puissance (CL) et une deuxième valeur de consigne de puissance (CH), la première valeur de consigne de puissance (CL) étant inférieure à une valeur de puissance de division proportionnelle obtenue en divisant proportionnellement une valeur de puissance requise comme puissance de sortie totale (DM) des inverseurs (INV1 à INVn) sur la base de sorties nominales respectives des inverseurs (INV1 à INVn), la deuxième valeur de consigne de puissance (CH) étant supérieure à la valeur de puissance de division proportionnelle, et
des moyens de commande (1) destinés à commander des puissances de sortie des inverseurs (INV1 à INVn) à la première valeur de consigne de puissance (CL) et à la deuxième valeur de consigne de puissance (CH) déterminées par les moyens de détermination de valeur de consigne de puissance (11), les moyens de détermination de valeur de consigne de puissance (11) déterminant la première valeur de consigne de puissance (CL) et la deuxième valeur de consigne de puissance (CH) à des valeurs de consigne de puissance qui peuvent être sorties par les inverseurs (INV1 à INVn) et sont les plus proches de la valeur de division proportionnelle,
les moyens de commande déterminant un nombre d'inverseurs (INV1 à INVn) devant effectuer une sortie à la première valeur de consigne de puissance (CL) et un nombre d'inverseurs (INV1 à INVn) devant effectuer une sortie à la deuxième valeur de consigne de puissance (CH), respectivement, pour faire en sorte que la puissance de sortie totale (DM) des inverseurs (INV1 à INVn) atteigne une valeur de puissance la plus proche de la valeur de puissance requise.

2. Le convertisseur de puissance (10) de la revendication 1, **caractérisé en ce qu'**il comprend en outre des moyens de commande communs destinés à commander des puissances de sortie des inverseurs (INVI à INVn) à une valeur de consigne de puissance commune.

3. Le convertisseur de puissance (10) de la revendication 1 ou 2, **caractérisé en ce qu'**il comprend en outre des moyens de détection d'un nombre d'inverseurs exploitables destinés à détecter un nombre d'inverseurs exploitables des inverseurs (INV1 à INVn).

4. Le convertisseur de puissance (10) de l'une quelconque des revendications 1 à 3, **caractérisé en ce que** les moyens de commande (1) exécutent une commande pour faire en sorte qu'un taux de changement de la puissance de sortie totale des inverseurs (INV1 à INVn) soit compris dans une plage admise prédéfinie.

5. Appareil de commande pour un convertisseur de puissance (10), sachant que l'appareil de commande est configuré pour commander le convertisseur de puissance incluant des inverseurs (INV1 à INVn), des côtés CA des inverseurs (INV1 à INVn) étant connectés en parallèle, l'appareil de commande étant **caractérisé en ce qu'**il comprend :
des moyens de détermination de valeur de consigne de puissance (11) destinés à déterminer une première valeur de consigne de puissance (CL) et une deuxième valeur de consigne de puissance (CH), la première valeur de consigne de puissance (CL) étant inférieure à une valeur de puissance de division proportionnelle obtenue en divisant proportionnellement une valeur de puissance requise comme puissance de sortie totale (DM) des inverseurs (INV1 à INVn) sur la base de sorties nominales respectives des inverseurs (INV1 à INVn), la deuxième valeur de consigne de puissance (CH) étant supérieure à la valeur de puissance de division proportionnelle, et
des moyens de commande (1) destinés à commander des puissances de sortie des inverseurs (INV1 à INVn) à la première valeur de consigne de puissance (CL) et à la deuxième valeur de consigne de puissance (CH) déterminées par les moyens de détermination de valeur de consigne de puissance (11),
les moyens de détermination de valeur de consigne de puissance (11) déterminant la première valeur de consigne de puissance (CL) et la deuxième valeur de consigne de puissance (CH) à des valeurs de consigne de puissance qui peuvent être sorties par les inverseurs (INV1 à INVn) et sont les plus proches de la valeur de division proportionnelle,
les moyens de commande déterminant un nombre d'inverseurs (INV1 à INVn) devant effectuer une sortie à la première valeur de consigne de puissance (CL) et un nombre d'inverseurs (INV1 à INVn) devant effectuer une sortie à la deuxième valeur de consigne de puissance (CN), respectivement, pour faire en sorte que la puissance de sortie totale (DM) des inverseurs (INV1 à INVn) atteigne une valeur de puissance la plus proche de la valeur de puissance requise.

6. Procédé de commande pour un convertisseur de puissance (10), le procédé de commande commandant le convertisseur de puissance incluant des inverseurs (INV1 à INVn), des côtés CA des inverseurs (INV1 à INVn) étant connectés en parallèle, le procédé de commande étant **caractérisé en ce qu'**il comprend :
le fait de déterminer une première valeur de consigne de puissance (CL) et une deuxième valeur de consigne de puissance (CH), la première valeur de consigne de puissance (CL) étant inférieure à une valeur de puissance de division proportionnelle obtenue en divisant proportionnellement une valeur de puissance requise comme puissance de sortie totale (DM) des inverseurs sur la base de sorties nominales respectives des inverseurs (INV1 à INVn), la deuxième valeur de consigne de puissance (CH) étant supérieure à la valeur de puissance de division proportionnelle ;
sachant que la première valeur de consigne de puissance (CL) et la deuxième valeur de consigne de puissance (CH) sont déterminées à des valeurs de consigne de puissance qui peuvent être sorties par les inverseurs (INV1 à INVn) et sont les plus proches de la valeur de division proportionnelle ; et
le fait de commander des puissances de sortie des inverseurs (INV1 à INVn) à la première valeur de consigne de puissance (CL) déterminées et à la deuxième valeur de consigne de puissance (CH) déterminée,
sachant qu'un nombre d'inverseurs (INV1 à INVn) devant effectuer une sortie à la première valeur de consigne de puissance (CL) et un nombre d'inverseurs (INV1 à INVn) devant effectuer une sortie à la deuxième valeur de consigne de puissance (CH), respectivement, pour faire en sorte que la puissance de sortie totale (DM) des inverseurs (INV1 à INVn) atteigne une valeur de puissance la plus proche de la valeur de puissance requise, sont déterminés.
